# EUROPÄISCHE PATENTSCHRIFT

(11) **EP 3 301 314 B1**
(45) Veröffentlichungstag und Bekanntmachung des Hinweises auf die Patenterteilung: **11.11.2020**
(21) Anmeldenummer: 17191511.9
(22) Anmeldetag: 18.09.2017
(51) Int. Cl.: F16B 37/04

(54) **2-KOMPONENTEN CLIP**
2-COMPONENT CLIP
CLIP À DEUX COMPOSANTS

(30) Priorität: 30.09.2016 DE 102016118657
(43) Veröffentlichungstag der Anmeldung: 04.04.2018
(73) Patentinhaber: SFS Intec Holding AG, 9435 Heerbrugg (CH)
(72) Erfinder: COSTABEL, Sascha, 71083 Herrenberg (DE); ROTTLER, Markus, 72224 Ebhausen (DE); LICHTENSTEIGER, Markus, 9462 Montlingen (DE)

(56) Entgegenhaltungen:
- EP-A1- 3 064 785
- WO-A1-2016/102989
- DE-A1- 19 831 001
- DE-A1-102015 104 963
- US-A- 3 646 982
- US-A1- 2002 119 026
- US-A1- 2008 310 931
- US-A1- 2015 152 908

## Beschreibung

Die vorliegende Erfindung befasst sich mit Leichtbaubefestigern, die in der Industrie als Klippmutter, Clip, Käfigmutter oder nach dem englischen Begriff als clip nut bezeichnet werden. Insbesondere bezieht sich die vorliegende Erfindung auf ein Verfahren zur Herstellung solcher Clips in einem 2-Komponenten-Spritzgussverfahren.

### HINTERGRUND

Im Fahrzeugbau wie in der Luftfahrtindustrie werden Befestigungselemente z.B. für Verkleidungen eingesetzt, die spezielle Anforderungen erfüllen müssen. Um spanende Verarbeitungsschritte bei der Endmontage zu vermeiden, werden z.B. plattenförmige Elemente vorgebohrt und vor der Endmontage mit Clips bzw. Inserts versehen, die mit Spiel angebrachte weitere Verschraubungselemente aufweisen. In diese Verschraubungselemente bzw. Schnapphalterungen greifen bei der Endmontage dann die Verbinder bzw. Befestiger zu anderen Verkleidungselementen bzw. strukturell tragenden Elementen ein. Die plattenförmigen Elemente bzw. Bauteile sind hierbei häufig Leichtbauwandelemente bzw. Sandwichpanels, die aus Gewichtsgründen zumeist aus zwei Aussenlagen (aus Kunststoff oder Aluminium) bestehen, welche mit einer wabenförmigen Aussteifung dazwischen verklebt sind.

### STAND DER TECHNIK

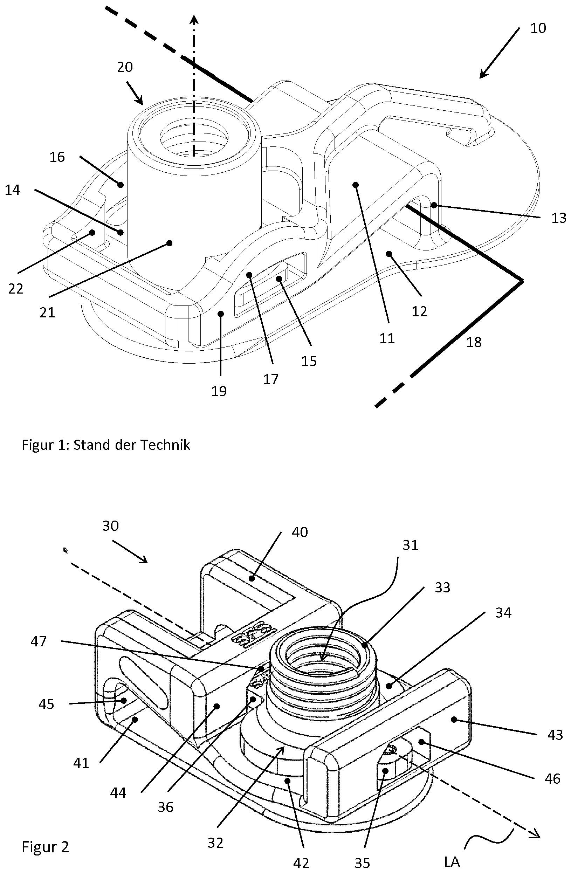

Ein Clip 10 der genannten Art ist in Figur 1 gezeigt. Grundsätzlich weist er die Grundform einer Klammer auf mit einem ersten Schenkel 11 und einem zweiten Schenkel 12 mit einem verbindenden Steg 13. Zur Montage wird der Clip auf eine Platte (nur angedeutet, 18) aufgeschoben, so dass ein Befestigungselement 20 über einer vorbereiteten Öffnung in der Platte (in Figur 1 verdeckt) zu liegen kommt. Dieses Befestigungselement 20 besteht im Wesentlichen aus einer plattenförmigen Basis (in Fig.1 nicht sichtbar) mit zwei Nasen (Vorsprünge 14, 15) und einem Mutternteil 21. Die zwei Vorsprünge 14, 15 werden in je einem Rahmen bzw. von einem die Nasen überspannenden Bügel 16, 17 der Seitenwangen 19, 22 des oberen Clip-Schenkels 11 gehalten. Die Rahmen sind so ausgeführt, dass das Befestigungselement 20 seitliches Spiel hat, aber aus dem Clip nicht herausfallen kann.

Die Befestigungsart, die das Befestigungselement 20 erlaubt, kann in vielen Varianten realisiert werden, zum Beispiel als lösbare oder unlösbare Einrastverbindung mit einer festen oder mehreren Raststufen. Weiterhin kann der zylinderförmige Abschnitt 21 ein Innengewinde aufweisen für eine Schraube. Eine Schraubverbindung hat hierbei den Vorteil der Lösbarkeit und die Möglichkeit der Anzugsmomentkontrolle. Das Befestigungselement 20 kann je nach Einsatzprofil aus Metall oder Kunststoff gefertigt werden.

Bei der Verwendung eines Leichtbaubefestigers, bei seiner Montage, wird ein Befestiger - in der Figur 1 von unten - durch eine Aussparung im Schenkel 12, eine in Deckung gebrachte Öffnung in der Platte 18 und eine weitere Öffnung im oberen Schenkel 11 geführt und dort mit dem Befestigungselement 20 verbunden. Damit wird die Platte 18 an einem anderen Element befestigt. Diese Art von Clipbefestigern gibt es in vielen Varianten mit unterschiedlichen Schenkellängen, Formen und für verschiedene Plattenstärken.

Die Schrift US 4,219,064 zeigt das Grundprinzip eines solchen Befestigers aus Metall, die jüngere US 6,474,917 (publiziert als US 2002/0119026 A1) zeigt eine Ausführung mit Kunststoff-Clip und einem Befestigungselement aus Metall. Bei der US 4,219,064 erfolgt die Herstellung aus einem plattenförmigen Blechteil, das entsprechend den konstruktiven Vorgaben gebogen und gestanzt wird. Das Befestigungselement wird in einem zweiten Arbeitsschritt manuell oder automatisiert in den eigentlichen Klippkörper eingefügt. Die spätere US 6,474,917 übernimmt die grundsätzliche Auslegung und Endmontage des Clips, formt jedoch den Klippkörper aus einem speziellen Kunststoff.

US 6,474,917 (US 2002/0119026 A1) beschreibt diesen Kunststoff als zugleich stabil und flexibel ("both strong and flexible"), was dem Anforderungsprofil an einen Kunststoff in diesem Bereich entgegenkommt. Jedoch sind die strukturell-mechanischen Anforderungen an den Clip nicht überall gleich. In den Bereichen, wo bei der Endmontage das Befestigungselement eingefügt werden soll, ist eine gewisse Elastizität erforderlich, ebenso in den Bereichen, die beim Aufschieben des Clips auf die Platte 18 eine Biegebelastung erfahren. Weitere Bereiche sollen dagegen grössere Festigkeit aufweisen und somit eine robuste Handhabung des Clips bei der Montage erlauben. Zudem muss der Clip bei der Montage das Drehmoment des eingeschobenen Befestigers aufnehmen können, dieses wird vom Befestigungselement 20 auf die Rahmen / Bügel 16, 17 übertragen, weshalb diese entsprechend ausgelegt sein müssen.

In der US 6,474,917 (US 2002/0119026 A1) wird zur Verbesserung der Flexibilität im Bereich des Steges 13 eine Schwächung der Materialwandstärke vorgeschlagen, was die Gelenkfunktion des Steges unterstützt. Natürlich wird im selben Masse jedoch die Festigkeit an dieser Stelle herabgesetzt.

### DARSTELLUNG DER ERFINDUNG

Die vorliegende Erfindung hat zum Ziel, die oben genannten Nachteile des Standes der Technik zu verringern und insbesondere einen Clip vorzustellen, der verbesserte Eigenschaften in Bezug auf Elastizität und Festigkeit aufweisen kann. Ferner soll ein Herstellverfahren beschrieben werden, das eine schnellere, sicherere und automatische Fertigung des Clips erlaubt. Die Erfindung wird durch einen Leichtbaubefestiger nach Anspruch 1, ein Verfahren zur Herstellung eines Klippkörpers nach Anspruch 9 und ein Verfahren zur Herstellung eines Leichtbaubefestigers nach Anspruch 11 defniert.

In allgemeinster Form beschreibt Anspruch 1 einen solchen Leichtbaubefestiger, er ist exemplarisch in Figur 2 gezeigt. Details zur Erfindung sind in den Figuren 3 und 4 hervorgehoben. In seiner Grundform umfasst der Leichtbaubefestiger oder Clip 30 einen Klippkörper 40 und ein Befestigungselement 32. Das Befestigungselement 32 wiederum umfasst eine flächige Basisplatte 34 mit zwei Vorsprüngen bzw. Nasen 35, 36 und einem mit der Basisplatte verbundenen Halteteil 33. Das Halteteil kann als Drahtmutter 51 ausgeführt sein oder in herkömmlicher Bauweise als im Wesentlichen zylindrisches Bauteil aus Metall, welches bevorzugt als Fliesspressteil oder Drehteil aus Blech oder Draht hergestellt wird.

Der Klippkörper 40 umfasst einen ersten Schenkel 41 und einen zweiten Schenkel 42, die einander gegenüberliegend angeordnet und an einem Ende durch einen Steg 45 miteinander verbunden sind. Die beiden einander zugewandten Seiten der Schenkel 41, 42 seien dabei als Innenseiten bezeichnet, die einander abgewandten Seiten als Aussenseiten. Der zweite Schenkel 42 weist auf seiner Aussenseite zwei Rahmen 43, 44 auf mit Durchbrüchen 46, 47, die die Vorsprünge 35, 36 des Befestigungselementes 32 aufnehmen bzw. umschliessen können und so voneinander beabstandet sind, dass das Befestigungselement im Klippkörper mit Spiel unverlierbar gehaltert werden kann. Der Klippkörper selbst ist einstückig, weist jedoch mindestens zwei Volumenabschnitte 61, 62 auf, wobei der erste Abschnitt 61 aus einem ersten Kunststoff und der zweite Volumenabschnitt 62 aus einem zweiten Kunststoff besteht. Die Eigenschaften des ersten und des zweiten Kunststoffes unterscheiden sich jeweils in einem oder mehreren Kriterien. Zwischen dem ersten und zweiten Kunststoff bzw. zwischen dem ersten und zweiten Volumenabschnitte 61, 62 existiert mindestens eine gemeinsame Berührungsfläche, wo die Materialien in direktem Kontakt stehen.

Unterschiede in den Eigenschaften können umfassen die Art der Kunststoffe (Duroplaste, Thermoplaste, Elastomere); Art und Menge/Anteil von Beimischungen (wie Glasfaser, Kohlefaser); Zuschläge chemischer Art, die die Elastizität, Härte, Festigkeit, Temperaturbeständigkeit, Flammverhalten, Porosität beeinflussen bzw. einstellen. Ebenso denkbar sind Indikatoren, zum Beispiel Stoffe, die eine vorangegangene Überbelastung, Überlagerung, Überhitzung, Risse oder ähnliches anzeigen können. Kombinationen der vorgenannten Materialien / Eigenschaftsträger sind natürlich möglich.

Für den beschriebenen Einsatzzweck bevorzugt sind Kunststoffpaarungen, die sich in Bezug auf Härte und Elastizität unterscheiden. So kann ein härterer Kunststoff für die Teile einer Clipnut verwendet werden, die Kräfte aufnehmen und ableiten müssen, während elastischere Kunststoffe dort zum Einsatz kommen, wo beim Einbau eine Verformung oder Anpassung erwünscht wird, z.B. im Bereich von Gelenken oder Anpassungen.

Besonders bevorzugt sind Kunststoffpaarungen, die aus einem Basiskunststoff bestehen und verschiedene Anteile von Zuschlagstoffen aufweisen, wie z.B. Fasern. Dies hat den Vorteil, dass die Vernetzung der Kunststoffe an den Verbindungsstellen bzw. Berührungsflächen des ersten Kunststoffs mit dem zweiten Kunststoff verbessert wird und dennoch die funktionale Unterscheidung der Bereiche erhalten bleibt.

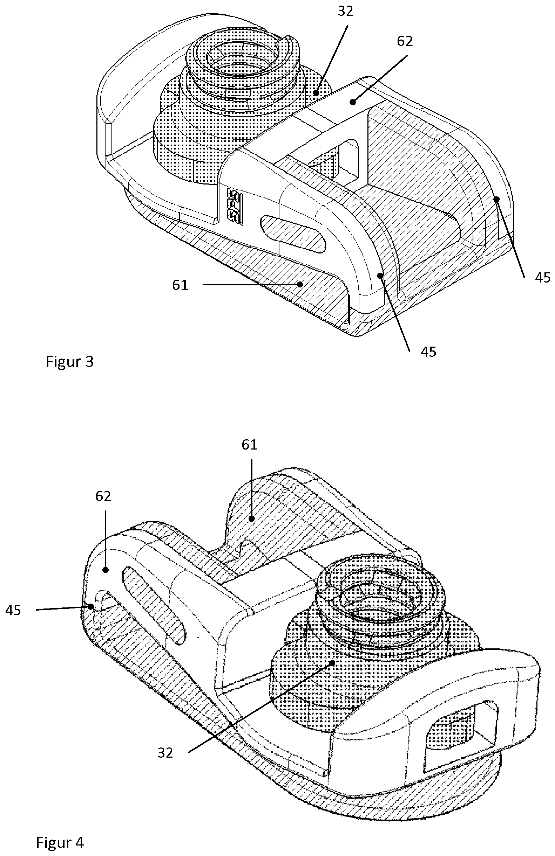

In einer Ausführungsform umfasst der erste Volumenabschnitt 61 den überwiegenden Teil des ersten Schenkels 41 und der zweite Volumenabschnitt 62 den überwiegenden Teil des zweiten Schenkels 42. Art, Gestaltung bzw. Aufteilung der Volumenabschnitte sowie der gemeinsamen Berührungsfläche wird einerseits durch die technischen Anforderungen festgelegt und andererseits durch die Umsetzbarkeit bestimmt. Die Darstellung in den Figuren 3 und 4 ist exemplarisch und soll nicht limitierend verstanden werden.

Erfindungsgemäß liegen im Bereich des Steges 45 sowohl Kunststoffe vom ersten wie zweiten Volumenabschnitt vor - konsequenterweise auch Berührungsflächen vorhanden sind. Das hat Vorteile, weil damit im gelenkigen Bereich zwischen den Schenkeln 41, 42 die notwendigen bzw. erwünschten Eigenschaften genau eingestellt werden können. So kann die z.B. Steifigkeit in dem Masse gewählt werden, wie es für die Drehmomentaufnahme erforderlich ist und die Elastizität in dem Masse gewährleistet werden, wie es beim Einbau notwendig ist.

In einer weiteren Ausführungsform weist der erste Kunststoff elastischere Eigenschaften aufweist als der zweite Kunststoff bzw. weist der erste Kunststoff härtere Eigenschaften auf als der zweite Kunststoff, je nach vorliegendem Einsatzprofil.

Eine besonders bevorzugte Bauweise eines Leichtbaubefestigers bzw. Clips zeichnet sich dadurch aus, dass die Rahmen 43, 44 im Wesentlichen quer und die Verbindungslinie der Nasen / Vorsprünge 35, 36 im Wesentlichen parallel zur Längsachse LA der Schenkel 41, 42 angeordnet sind. Die Nasen / Vorsprünge 35, 36 machen einen Grossteil der Ausdehnung des Befestigungselementes in der Ebene aus, daher erlaubt die Anordnung parallel zur Längsachse eine schlankere Ausführung des Clips im Vergleich zum Stand der Technik.

Ein Verfahren zur Herstellung eines Klippkörpers 40 - als ein Bestandteil eines Leichtbaubefestigers oder Clips 30 - umfasst demnach die Herstellung als ein Stück in einem Mehrkomponenten-Spritzgussverfahren aus mindestens zwei Kunststoffen. Ein Klippkörper umfasst hierbei in seiner wesentlichen Grundform einen ersten Schenkel 41 und einen zweiten Schenkel 42, die einander gegenüberliegend angeordnet und an einem Ende durch einen Steg 45 miteinander verbunden sind.

Erfindungsgemäß weist der Klippkörper mindestens zwei Volumenabschnitte 61, 62 auf, wobei der erste Abschnitt 61 in einem ersten Prozessschritt aus einem ersten Kunststoff gefertigt wird und der zweite Volumenabschnitt 62 in einem zweiten Prozessschritt aus einem zweiten Kunststoff angespritzt wird, so dass mindestens eine gemeinsame Berührungsfläche zwischen den beiden Volumenabschnitten 61, 62 entsteht. Die Eigenschaften des ersten und des zweiten Kunststoffes sich unterscheiden sich hierbei.

Der erste beschriebene Prozessschritt findet dabei in einer ersten Kavität, der zweite Prozessschritt in einer zweiten Kavität einer Spritzgiessmaschine entsprechender Bauart statt.

In einer besonders bevorzugten Weiterbildung der Erfindung umfasst das Verfahren zur Herstellung des Leichtbaubefestigers bzw. Clips 30 folgende Prozessschritte: a) Das Einlegen eines Befestigungselementes 32 in ein Spritzgusswerkzeug; b) das Umkapseln des Befestigungselements 32 und c) das Umspritzen des Befestigungselementes 32 nach dem vorbeschriebenen Verfahren für die Herstellung eines Klippkörpers.

Durch dieses Vorgehen ist es möglich, den in der Prior Art notwendigen Arbeitsschritt der manuellen oder automatisierten Montage des Befestigungselementes 32 in einen separat hergestellten Klippkörper 40 zu vermeiden - die Spritzgiessmaschine verlässt ein fertiger Clip. Der Schritt der Umkapselung des Befestigungselementes ist notwendig, um die durch die Bauweise des Clips bedingte Beweglichkeit des Befestigungselementes im Rahmen 43, 44 zu gewährleisten.

### BESCHREIBUNG DER FIGUREN

Die Figur 1 bezieht sich auf einen Leichtbaubefestiger nach dem Stand der Technik. Die Merkmale sind bereits oben erläutert.
Figur 2 zeigt einen Leichtbaubefestiger 30 gemäss einer Ausführung der Erfindung; aufgebaut aus einem ersten Schenkel 41 und einem zweiten Schenkel 42, verbunden durch einen Steg 45 (hier zweiteilig ausgeführt). Die Ausdehnung der Schenkel senkrecht zum Steg bzw. Stegbereich definiert die Längsausdehnung des Leichtbaubefestigers 30 und ist als Längsachse LA angedeutet. Der grundsätzliche Aufbau als Klammer oder Clip wird ergänzt durch die Elemente, die auf der Oberseite bzw. Aussenseite von Schenkel 42 das Befestigungselement 32 aufnehmen. Letzteres besteht aus einer Basisplatte 34 mit einem darauf befestigten zylindrischen Halteteil 33, das eine zentrale Durchgangsöffnung 31 aufweist. An der Basisplatte 34 befinden sich in der Grundausführung zwei Nasen oder Vorsprünge 35, 36. Diese greifen in zwei Öffnungen 46, 47 ein, die in quer zu der Längsachse LA angeordneten Rahmen oder Käfigen 43, 44 vorgesehen sind.
Figur 3 und 4 zeigen einen Leichtbaubefestiger bzw. Clip 30 gemäss der Erfindung mit dem prinzipiell gleichen Aufbau, aber etwas abweichendem Design. Gemäss der beschriebenen Zusammensetzung aus (mindestens) zwei Volumenabschnitten 61, 62 bezeichnet der schraffierte Teil 61 den ersten Volumenabschnitt, der Volumenabschnitt 62 ist weiss dargestellt. Das Befestigungselement weist eine gepunktete Kennzeichnung auf. Wie vorbeschrieben wird Volumenabschnitt 61 von einem ersten Kunststoff, Volumenabschnitt 62 von einem zweiten Kunststoff gebildet. Durch den zweistufigen Spritzgiessprozess für diesen Klippkörper wird in einer ersten Kavität zuerst ein Teilvolumen des Klippkörpers gefertigt und in einer weiteren Kavität der zweite Volumenanteil ergänzt / angespritzt. Dort, wo der erste und der zweite Kunststoff aufeinander treffen, an der/den gemeinsamen Berührungsfläche(n), wird eine Vernetzung der Kunststoffe stattfinden können, wenn eine entsprechende Materialpaarung gewählt wurde.
Figur 3 und 4 zeigen 3-D Ansichten aus unterschiedlichen Perspektiven.

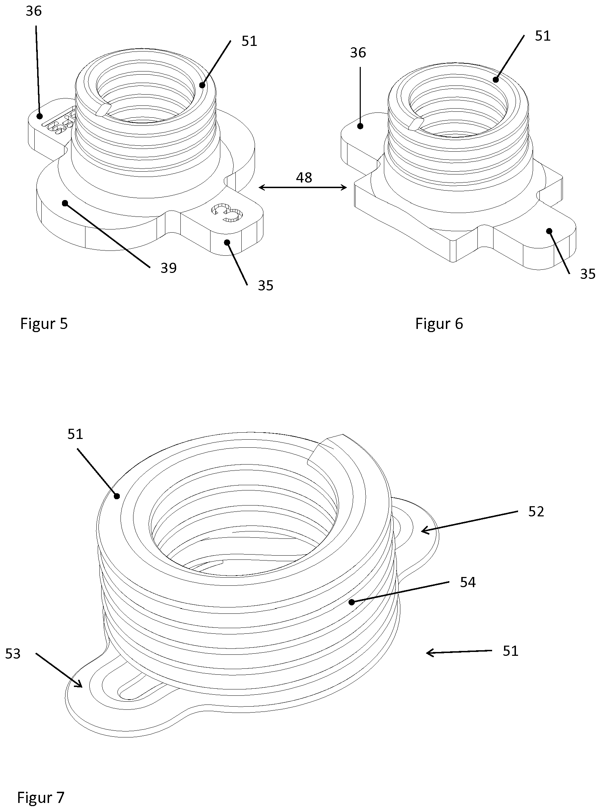

Die Figuren 5 und 6 zeigen Befestigungselemente 32 mit Basisplattenvarianten 48 mit Vorsprüngen 35, 36. Figur 6 verwendet eine im Grundsatz eckige Basisplatte, während Figur 5 auf eine ovale Basisplatte zurückgreift, bevorzugt wird das Oval mit seiner grosse Halbachse 39 quer zur Verbindungslinie der Vorsprünge 35, 36 angeordnet. Sowohl Figur 5 wie 6 zeigen eine sogenannte Drahtmutter 51 als Gewinde statt eines zylindrischen, in einem Stauch- bzw. Pressverfahren hergestellten Mutternteil.
Figur 7 zeigt eine Weiterbildung einer Drahtmutter 51, die komplett incl. Gewindeteil 54 und Drahtschleifen 52, 53 (funktionell äquivalent zu den Vorsprüngen 35, 36) aus Profildraht gefertigt wurde. Dies erlaubt es, das Befestigungselement 32 aus einem Stück zu fertigen. Die Verwendbarkeit in einem Leichtbaubefestiger bzw. Clip 30 ist dieselbe wie bei einem Befestigungselement 32 gemäss Stand der Technik.

### BEZUGSZEICHENLISTE

- 10: Clip
- 11: erster Schenkel
- 12: zweiter Schenkel
- 13: Steg
- 14, 15: Vorsprünge, Nasen
- 16, 17: Rahmen, Bügel
- 18: Platte
- 19, 22: Seitenwangen
- 20: Befestigungselement
- 21: Mutternteil
- 30: Leichtbaubefestiger, Klippmutter, Clip
- 32: Befestigungselement
- 33: Halteelement, Halteteil
- 34: Basisplatte
- 35, 36: Vorsprung, Nase
- 39: grosse Halbachse einer ovalen Basisplatte
- 40: Klippkörper
- 41: erster Schenkel
- 42: zweiter Schenkel
- 43, 44: Rahmen, Käfig
- 45: Steg
- 46,47: Durchbruch
- 48: Basisplatte mit eckiger Grundform
- 51: Drahtmutter
- 52, 53: Drahtschleife(n)
- 54: Gewindeteil
- 61: erster Volumenabschnitt
- 62: zweiter Volumenabschnitt

## Patentansprüche

1. Leichtbaubefestiger bestehend aus einem Clip (30), umfassend
- einen einstückigen Klippkörper (40) aus Kunststoff, hergestellt nach einem Verfahren nach Anspruch 10-12, mit einem ersten Schenkel (41) und einem zweiten Schenkel (42), die einander gegenüberliegend angeordnet und an einem Ende durch einen Steg (45) miteinander verbunden sind;
- ein Befestigungselement (32) mit einer flächige Basisplatte (34) mit zwei Vorsprüngen bzw. Nasen (35, 36) und einem mit der Basisplatte verbundenen Halteteil (33),
- wobei der zweite Schenkel (42) auf seiner Aussenseite zwei Rahmen (43, 44) aufweist mit Durchbrüchen (46, 47), die die Vorsprünge (35, 36) des Befestigungselementes (32) aufnehmen können und so voneinander beabstandet sind, dass das Befestigungselement im Klippkörper mit Spiel unverlierbar gehaltert werden kann, wobei
- der Klippkörper mindestens zwei Volumenabschnitte (61, 62) aufweist, wobei der erste Volumenabschnitt (61) aus einem ersten Kunststoff und der zweite Volumenabschnitt (62) aus einem zweiten Kunststoff besteht
- und die Eigenschaften des ersten und des zweiten Kunststoffes sich unterscheiden, **dadurch gekennzeichnet, dass** der Steg (45) die ersten und zweiten Volumenabschnitte (61,62) aufweist.

2. Leichtbaubefestiger bestehend aus einem Clip (30) nach Anspruch 1, **dadurch gekennzeichnet, dass** mindestens eine gemeinsame Berührungsfläche zwischen den beiden Volumenabschnitten (61, 62) existiert.

3. Leichtbaubefestiger bestehend aus einem Clip (30) nach Anspruch 1-2, **dadurch gekennzeichnet, dass** die Unterschiede in den Eigenschaften begründet sind in der Art der Kunststoffe; und/oder der Art und Menge bzw. Anteil von Beimischungen; und/oder der Zuschläge chemischer Art, die die Elastizität, Härte, Festigkeit, Temperaturbeständigkeit, Flammverhalten, Porosität beeinflussen bzw. einstellen.

4. Leichtbaubefestiger bestehend aus einem Clip (30) nach Anspruch 1-3, **dadurch gekennzeichnet, dass** der erste Volumenabschnitt (61) den überwiegenden Teil des ersten Schenkels (41) umfasst.

5. Leichtbaubefestiger bestehend aus einem Clip (30) nach Anspruch 1-4, **dadurch gekennzeichnet, dass** der zweite Volumenabschnitt (62) den überwiegenden Teil des zweiten Schenkels (42) umfasst.

6. Leichtbaubefestiger bestehend aus einem Clip (30) nach Anspruch 1-5, **dadurch gekennzeichnet, dass** die Rahmen (43, 44) im Wesentlichen quer und die Verbindungslinie der Nasen / Vorsprünge (35, 36) im Wesentlichen parallel zur Längsachse der Schenkel (41, 42) angeordnet sind.

7. Leichtbaubefestiger bestehend aus einem Clip (30) nach Anspruch 1 6, **dadurch gekennzeichnet, dass** der erste Kunststoff elastischere Eigenschaften aufweist als der zweite Kunststoff.

8. Leichtbaubefestiger bestehend aus einem Clip (30) nach Anspruch 1 6, **dadurch gekennzeichnet, dass** der erste Kunststoff härtere Eigenschaften aufweist als der zweite Kunststoff.

9. Verfahren zur Herstellung eines Klippkörpers (40) aus Kunststoff, wobei der Klippkörper (40) einen ersten Schenkel (41) und einen zweiten Schenkel (42) aufweist, die einander gegenüberliegend angeordnet und an einem Ende durch einen Steg (45) miteinander verbunden sind;
wobei der zweite Schenkel (42) auf seiner Aussenseite zwei Rahmen (43,44) aufweist mit Durchbrüchen (46,47), die Vorsprünge (35,36) eines Befestigungselementes (32) aufnehmen können und so voneinander beabstandet sind, dass das Befestigungselement im Klippkörper mit Spiel unverlierbar gehaltert werden kann, wobei der Klippkörper als ein Stück in einem Mehrkomponenten-Spritzgussverfahren aus mindestens zwei Kunstoffen hergestellt wird,
- wobei der Klippkörper (40) mindestens zwei Volumenabschnitte (61, 62) aufweist,
- wobei der erste Volumenabschnitt (61) in einem ersten Prozessschritt aus einem ersten Kunststoff gefertigt wird
- und der zweite Volumenabschnitt (62) in einem zweiten Prozessschritt aus einem zweiten Kunststoff angespritzt wird
- so dass mindestens eine gemeinsame Berührungsfläche zwischen den beiden Volumenabschnitten (61, 62) entsteht,
- wobei die Eigenschaften des ersten und des zweiten Kunststoffes sich unterscheiden, **dadurch gekennzeichnet, dass** der Steg (45) die ersten und zweiten Volumenabschnitte (61,62) aufweist.

10. Verfahren zur Herstellung eines Klippkörpers (40) nach Anspruch 9, **dadurch gekennzeichnet, dass** der erste Prozessschritt in einer ersten Kavität, der zweite Prozessschritt in einer zweiten Kavität stattfindet.

11. Verfahren zur Herstellung eines Leichtbaubefestigers bestehend aus einem Clip (30) nach Anspruch 18, durch folgende Schritte **gekennzeichnet,**
a. Einlegen eines Befestigungselementes (32) in ein Spritzgusswerkzeug
b. Umkapseln des Befestigungselements (32)
c. Umspritzen des Befestigungselementes (32) nach einem Verfahren gemäss Anspruch 9-10

## Claims

1. A lightweight construction fastener consisting of a clip (30), comprising
- a one-piece clip body (40) made of plastic, produced by a method according to claims 10 - 12, with a first leg (41) and a second leg (42) which are arranged opposite each other and connected to each other at one end by a web (45);
- a fastening element (32) with a flat base plate (34) with two projections or nibs (35, 36) and a holding part (33) connected to the base plate (33),
- wherein the second leg (42), on its outer side, has two frames (43, 44) with openings (46, 47) which can receive the projections (35, 36) of the fastening element (32) and which are spaced apart from each other such that the fastening element can be captively held in the clip body with play, wherein
- the clip body comprises at least two volume sections (61, 62), the first volume section (61) consisting of a first plastic and the second volume section (62) consisting of a second plastic,
- and the properties of the first and the second plastics differ from each other, **characterized in that** the web (45) includes the first and second volume sections (61, 62).

2. The lightweight construction fastener consisting of a clip (30) according to claim 1, **characterized in that** at least one common contact surface exists between the two volume sections (61, 62).

3. The lightweight construction fastener consisting of a clip (30) according to claims 1 - 2, **characterized in that** the differences in the properties are based on the type of plastics; and/or the type and quantity or proportion of admixtures; and/or the chemical-type additives which influence or adjust the elasticity, hardness, strength, temperature resistance, flame-spread behavior, porosity.

4. The lightweight construction fastener consisting of a clip (30) according to claims 1 - 3, **characterized in that** the first volume section (61) comprises the major part of the first leg (41).

5. The lightweight construction fastener consisting of a clip (30) according to claims 1 - 4, **characterized in that** the second volume section (62) comprises the major part of the second leg (42).

6. The lightweight construction fastener consisting of a clip (30) according to claims 1 - 5, **characterized in that** the frames (43, 44) are arranged substantially transverse to the longitudinal axis of the legs (41, 42) and the connecting line of the nibs / projections (35, 36) is arranged substantially parallel to said longitudinal axis.

7. The lightweight construction fastener consisting of a clip (30) according to claims 1 - 6, **characterized in that** in terms of properties, the first plastic is more elastic than the second plastic.

8. The lightweight construction fastener consisting of a clip (30) according to claims 1 - 6, **characterized in that** in terms of properties, the first plastic is harder than the second plastic.

9. A method for producing a clip body (40) made of plastic, wherein the clip body (40) has a first leg (41) and a second leg (42) which are arranged opposite each other and connected to each other at one end by a web (45); wherein the second leg (42), on its outer side, has two frames (43, 44) with openings (46, 47) which can receive the projections (35, 36) of a fastening element (32) and which are spaced apart from each other such that the fastening element can be captively held in the clip body with play, wherein the clip body is produced as one piece in a multi-component injection molding process from at least two plastics,
- wherein the clip body (40) has at least two volume sections (61, 62),
- wherein the first section (61) is produced from a first plastic in a first process step
- and the second volume section (62) is injection molded from a second plastic material in a second process step
- so that at least one common contact surface is created between the two volume sections (61, 62),
- wherein the properties of the first and second plastics differ, **characterized in that** the web (45) includes the first and second volume sections (61, 62).

10. The method for producing a clip body (40) according to claim 9, **characterized in that** the first process step is carried out in a first cavity and the second process step in a second cavity.

11. A method for producing a lightweight construction fastener consisting of a clip (30) according to claim 8, **characterized by** the following steps:
a. inserting the fastening element (32) into an injection molding tool,
b. encapsulating the fastening element (32),
c. overmolding the fastening element (32) by a method according to claims 9 - 10.

## Revendications

1. Fixation pour construction légère composée d'une pince (30), comprenant
- un corps de pince (40) monobloc en matière plastique, fabriqué selon un procédé selon les revendications 10-12, avec une première branche (41) et une deuxième branche (42), qui sont disposées opposées l'une à l'autre et sont reliées l'une à l'autre à une extrémité par une nervure (45),
- un élément de fixation (32) avec une plaque de base (34) plane avec deux saillies ou tétons (35, 36) et une pièce de retenue (33) reliée à la plaque de base (33),
- sachant que la deuxième branche (42) comporte sur son côté extérieur deux cadres (43, 44) avec des passages (46, 47), qui peuvent loger les saillies (35, 36) de l'élément de fixation (32) et sont à distance l'un de l'autre de telle sorte que l'élément de fixation peut être maintenu imperdable avec du jeu dans le corps de pince, sachant que
- le corps de pince comporte au moins deux sections de volume (61, 62), sachant que la première section de volume (61) est composée d'une première matière plastique et la deuxième section de volume (62) d'une deuxième matière plastique,
- et que les propriétés de la première et de la deuxième matière plastique sont différentes, **caractérisée en ce que** la nervure (45) comporte les première et deuxième sections de volume (61, 62).

2. Fixation pour construction légère composée d'une pince (30) selon la revendication 1, **caractérisée en ce qu'**au moins une surface de contact commune existe entre les deux sections de volume (61, 62).

3. Fixation pour construction légère composée d'une pince (30) selon les revendications 1-2, **caractérisée en ce que** les différences résident dans les propriétés, dans le type des matières plastiques et/ou le type et quantité ou part d'additions de mélange, et/ou les additifs de type chimique, qui influencent ou fixent l'élasticité, la dureté, la résistance, la résistance aux températures, le comportement à la flamme, la porosité.

4. Fixation pour construction légère composée d'une pince (30) selon les revendications 1-3, **caractérisée en ce que** la première section de volume (61) comprend la partie prédominante de la première branche (41).

5. Fixation pour construction légère composée d'une pince (30) selon les revendications 1-4, **caractérisée en ce que** la deuxième section de volume (62) comprend la partie prédominante de la deuxième branche (42).

6. Fixation pour construction légère composée d'une pince (30) selon les revendications 1-5, **caractérisée en ce que** les cadres (43, 44) sont disposés pour l'essentiel transversalement et la ligne de liaison des tétons/saillies (35, 36) pour l'essentiel parallèlement à l'axe longitudinal des branches (41, 42).

7. Fixation pour construction légère composée d'une pince (30) selon les revendications 1-6, **caractérisée en ce que** la première matière plastique comporte des propriétés plus élastiques que la deuxième matière plastique.

8. Fixation pour construction légère composée d'une pince (30) selon les revendications 1-6, **caractérisée en ce que** la première matière plastique comporte des propriétés plus dures que la deuxième matière plastique.

9. Procédé de fabrication d'un corps de pince (40) en matière plastique, sachant que le corps de pince (40) comporte une première branche (41) et une deuxième branche (42), qui sont disposées opposées l'une à l'autre et sont reliées l'une à l'autre à une extrémité par une nervure (45), sachant que la deuxième branche (42) comporte sur son côté extérieur deux cadres (43, 44) avec des passages (46, 47), qui peuvent loger des saillies (35, 36) d'un élément de fixation (32) et sont à distance l'un de l'autre de telle sorte que l'élément de fixation peut être maintenu imperdable avec du jeu dans le corps de pince, sachant que le corps de pince est fabriqué en une pièce dans un procédé de moulage par injection à composants multiples d'au moins deux matières plastiques,
- sachant que le corps de pince (40) comporte au moins deux sections de volume (61, 62),
- sachant que la première section de volume (61) est fabriquée dans une première étape de procédé dans une première matière plastique,
- et que la deuxième section de volume (62) est moulée par injection dans une deuxième étape de procédé dans une deuxième matière plastique,
- de telle sorte qu'au moins une surface de contact commune est créée entre les deux sections de volume (61, 62),
- sachant que les propriétés des première et deuxième matières plastiques sont différentes, **caractérisé en ce que** la nervure (45) comporte les première et deuxième sections de volume (61, 62).

10. Procédé de fabrication d'un corps de pince (40) selon la revendication 9, **caractérisé en ce que** la première étape de procédé a lieu dans une première cavité, la deuxième étape de processus dans une deuxième cavité.

11. Procédé de fabrication d'une fixation pour construction légère composée d'une pince (30) selon les revendications 1-8, **caractérisé par** les étapes suivantes,
a. insertion d'un élément de fixation (32) dans un outil de moulage par injection,
b. encapsulation de l'élément de fixation (32),
c. enrobage par extrusion de l'élément de fixation (32) selon un procédé selon les revendications 9-10.
